# EUROPEAN PATENT SPECIFICATION

(11) **EP 1 184 762 B1**
(45) Date of publication and mention of the grant of the patent: **23.06.2004**
(21) Application number: 01307441.4
(22) Date of filing: 31.08.2001
(51) Int. Cl.: G05B 19/416

(54) **Rotary hammer**
Schlagbohrmaschine
Perceuse à percussion

(30) Priority: 01.09.2000 GB 0021368
(43) Date of publication of application: 06.03.2002
(73) Proprietor: Black & Decker Inc., Newark Delaware 19711 (US)
(72) Inventor: Plietsch, Reinhard, 73257 Köngen (DE)
(74) Representative: Dlugosz, Anthony Charles

(56) References cited:
- GB-A- 2 086 777
- US-A- 4 157 231
- US-A- 4 688 970
- US-A- 5 755 537

## Description

This invention relates to rotary hammers.

Rotary hammers normally comprise a percussion mechanism for impacting a tool bit that is received by the hammer, for example in a tool holder, and a rotary drive mechanism for rotating the bit. In most cases, a single motor is employed for both mechanisms, with the result that the ratio of the rate of impacts on the tool bit to its rotational speed is always constant. This is not particularly advantageous since in order to optimise the drilling performance, the number of impacts per revolution of the bit will need to be varied depending on a number of operational parameters such as the diameter of the bit, the hardness of the material that is being drilled and the force with which the hammer is applied to the workpiece. GB-A-2,086,777 describes a hammer that includes two motors, one for driving the percussion mechanism and the other for the rotary drive mechanism, so that the relationship between the rotational speed of the tool bit and the frequency of impacts can be selected between wide limits in order to optimise the drilling performance. Such a hammer, however, has the disadvantage that the operator has to calculate and select the appropriate impact per revolution rate depending on the bit size, material etc. which may not be the optimum value, and this value is then set for the entire drilling operation.

US 4688970 discloses an arrangement in which the drilling speed and rate of feed of a drill bit are controlled in dependence upon the thrust sensed by a spindle thrust load cell.

According to the present invention there is provided a rotary hammer which comprises a percussion mechanism for impacting a tool bit received by the hammer, and a rotary drive mechanism for rotating the bit, the percussion mechanism and the rotary drive mechanism being variable so that the ratio of rate of impacts on the bit to its rotational speed can be varied, characterised in that the hammer includes a sensor for detecting at least one property that is influenced by the operation of the hammer, a processor that determines from the property a number of operational parameters, and determines from the operational parameters the desired ratio of impact rate to rotational speed, and means for setting the impact rate and rotational speed in response to the processor.

The hammer according to the present invention has the advantage that the operator need not perform any mental process before drilling, but simply engages the hammer in the workpiece, and the appropriate ratio of impact rate to rotational speed of the bit is determined automatically by the hammer.

The sensor may by any one of a number of sensors that can detect properties of the hammer that are influenced by the operation of the hammer, that is to say, a property that is influenced by the operational parameters of the hammer. For example, the hammer may include a sensor for detecting acceleration in the direction of the axis of rotation of the bit, so that a vibration spectrum may be obtained from the sensor. However, other sensors may be employed instead, for example sensors for detecting instantaneous current consumption in order to detect drilling power and impact power transients.

The hammer may include more than just a single sensor. For example it may include one or more additional sensors to measure acceleration in a direction perpendicular to the axis of the bit, or it may include a current detector for determining the armature winding current. The hammer may include a sensor for determining the force with which the hammer is applied to the workpiece by the operator or by a mechanism, although in other cases this may be determined by analysis of the vibration spectrum obtained from the accelerometer(s). The signals from the sensors are used by the processor to determine the operational parameters of the drilling operation, for example the diameter of the drill bit being employed, and the hardness of the material forming the workpiece. If desired, the processor may also determine the force with which the hammer is applied to the workpiece (the user bias load) from the vibration spectrum rather than needing a separate sensor for this purpose. The determination of the operational parameters may be performed in a number of ways. This may, for example, be achieved by detecting the amplitude of the fundamental vibrational peak in the vibration spectrum and comparing this with the intensity of the harmonics in the vibration spectrum, and/or measuring the peak width (e.g. at half-height) of the fundamental and/or harmonics, and then employing one or more empirical algorithms obtained from trials to convert the vibrational data to a knowledge of the operational parameters. In some cases, it may be simpler to employ a look-up table to convert vibrational spectra to operational parameters. Once the operational parameters are known, in particular the bit size, material hardness and operator bias load, the appropriate ratio of impact rate to rotational speed can be found. As with determination of the operational parameters, this may be determined either by one or more empirical algorithms or by means of a look-up table based on previous testing. It may, in fact, not be necessary to determine the operational parameters or all of them in order to determine the appropriate number of impacts per revolution, but instead this value may, in some instances, be determined directly from the vibrational spectrum.

The purpose of setting the ratio of impact rate to rotational speed is to optimise the operation of the hammer, although the particular aspect of operation that is to be optimised may depend on the type of hammer. Thus, in many cases, the ratio of impact rate to rotational speed will be adjusted in order to maximise the rate of penetration of the bit into the workpiece. However, in other cases, it may be desired to minimise the energy consumption of the hammer for any given depth of penetration into the workpiece. This may be of principal importance in the case of battery powered hammers. The value of the actual rate of penetration may be detected, for example, by integrating the signal from the accelerometer (in the direction of the axis of rotation of the bit) over an appropriate time period.

The hammer according to the invention may be employed in a number of ways. For example, it may be used in an open-loop manner in which the processor receives signals from the sensors in an initial phase of drilling, and determines the optimum ratio of impact rate to rotational speed which is used for the remainder of the drilling operation. Alternatively, the hammer may be used in a closed-loop manner. In this mode of operation, the hammer includes a feedback loop in which the value of the of the quantity to be optimised, for example the ratio of impact rate to rotational speed, is calculated by the microprocessor from values of the other properties such as the acceleration (parallel or perpendicular to the axis of rotation) user bias etc. and the values for the impact rate and rotational speed are fed to the drives for the two motors. The actual values of the properties are measured repeatedly, for example every few seconds, and the speeds of the rotary drive and of the hammer drive motors are then continually adjusted by the microprocessor in response to those values and values of any other input parameters such as user bias. The closed-loop operation has the advantage that the ratio of impact rate to rotational speed can be varied automatically during the drilling operation in response to changed to the operational parameters. For example, the ratio may be changed to take into account variations in material hardness, e.g. where a hard inclusion in the material is hit, or where the material becomes softer, or changes in operator bias load due to operator fatigue.

The microprocessor may determine the required ratio of impact rate to rotational speed from the measured values of the properties in a number of ways, by inspection of the vibrational spectra. The output of this process is then passed to a look-up table in which the optimum values of the ratio of impact rate to rotational speed for all combinations of the parameters have been stored, in order to obtain values for the relevant motor speed controllers.

Two forms of hammer in accordance with the present invention will now be described by way of example with reference to the accompanying drawings, in which:
Figure 1 shows schematically a hammer according to the invention;
Figure 2 is a graphical representation showing the variation of removal of material as a function of drill bit diameter;
Figure 3 is a graphical representation of the vibration spectrum of the hammer in the direction of the axis of the bit when a point chisel is employed;
Figure 4 is a graphical representation of the vibration spectrum of the hammer in the direction of the axis of the bit when a 20 mm drill bit is used;
Figure 5 is a flow diagram indicating the operation of the hammer.

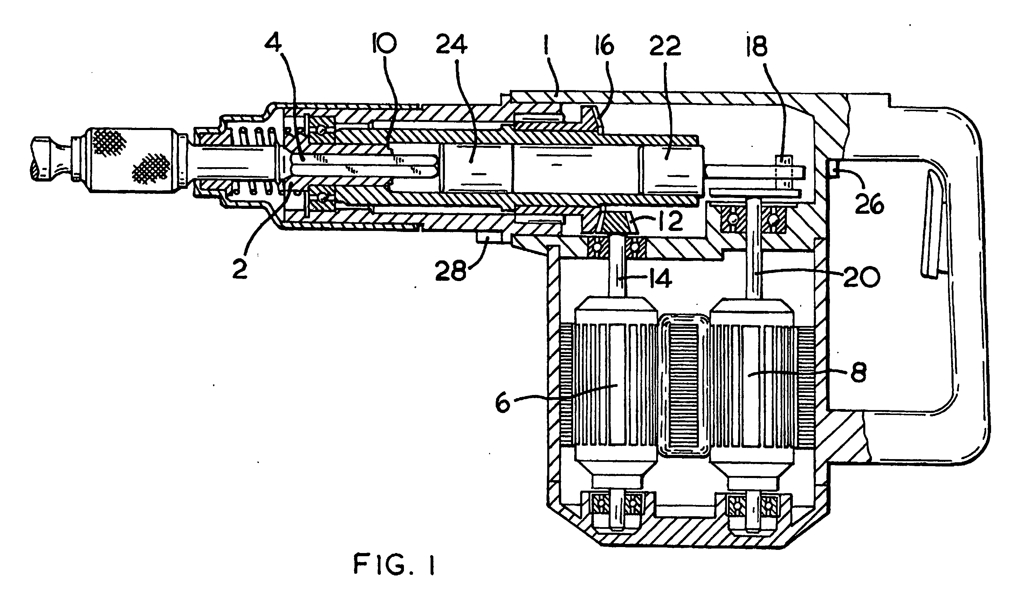

Referring to the accompanying drawings, figure 1 shows a rotary hammer of the general design shown in GB-A-2,086,777. This form of hammer comprises a housing 1, a tool holder 2 that can receive a tool bit 4, and a pair of electric motors 6 and 8. The hammer includes a spindle 10 that supports the tool holder 2 and which can be rotated by means of one motor 6 and a rotary drive mechanism which comprises a bevel gear 12 located on the end of the armature shaft 14 of the motor 6 and another bevel gear 16 formed in the rear end of the spindle which meshes therewith. An air-cushion hammer mechanism is shown schematically and comprises a crank 18 driven by the armature shaft 20 of motor 8 which is connected to a piston 22 and causes the piston to slide with reciprocating movement within the spindle. A beat piece 24 is also located within the spindle and is mechanically connected to the piston 22 by means of an air cushion formed in the spindle between the piston and the beat piece, so that the beat piece will slide to and fro in the spindle in response to the movement of the piston. The beat piece will hit the rearward end of the tool bit 4 as it moves forward and thereby cause the bit to hit the workpiece with which it is engaged. Because the rotary drive mechanism and the hammer mechanism are driven independently by separate motors, the impact rate of the hammer mechanism on the tool bit, and the rotational speed of the spindle can be varied independently of one another in order to vary the number of impacts per rotation of the bit.

The hammer is modified by the addition of a small piezoelectric accelerometer 26 that detects vibration in the direction of the axis of the spindle and tool bit, and a further accelerometer 28 that detects vibration in a direction perpendicular to the axis of the spindle. The output of the accelerometers is fed to a microprocessor (not shown) which controls the motors 6 and 8.

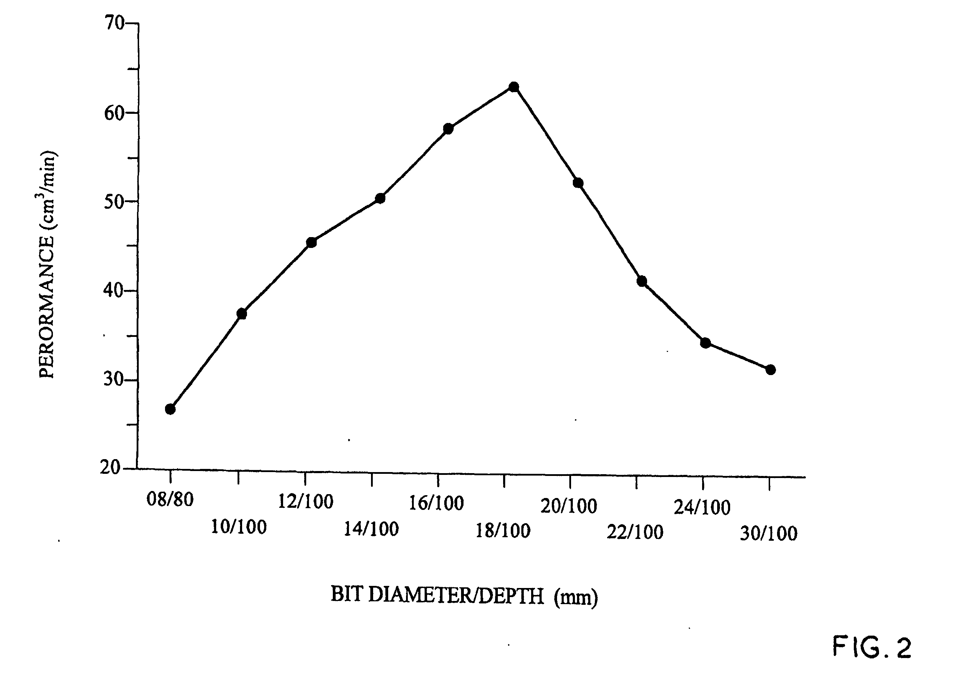

Figure 2 indicates very generally a typical variation of rate of removal of material from a concrete workpiece as a function of bit diameter for a given number of impacts per revolution of the drill bit. For very small drill bits, in this case about 8 to 10 mm, the rate of removal of material is relatively low since, in this region, the impact energy of the hammer is too high for the size of the hole and the rate of formation of the hole is limited by the ability to remove the dust generated from the hole. As the bit diameter is increased, the rate of removal is increased until the optimum relationship is reached between the number of impacts per revolution and bit diameter. If the diameter is increased yet further, the rate of removal of material falls off because, in this region, the impact energy of the hammer is too low or the rotational speed of the bit too high, so that the bit jumps around within the hole that is formed.

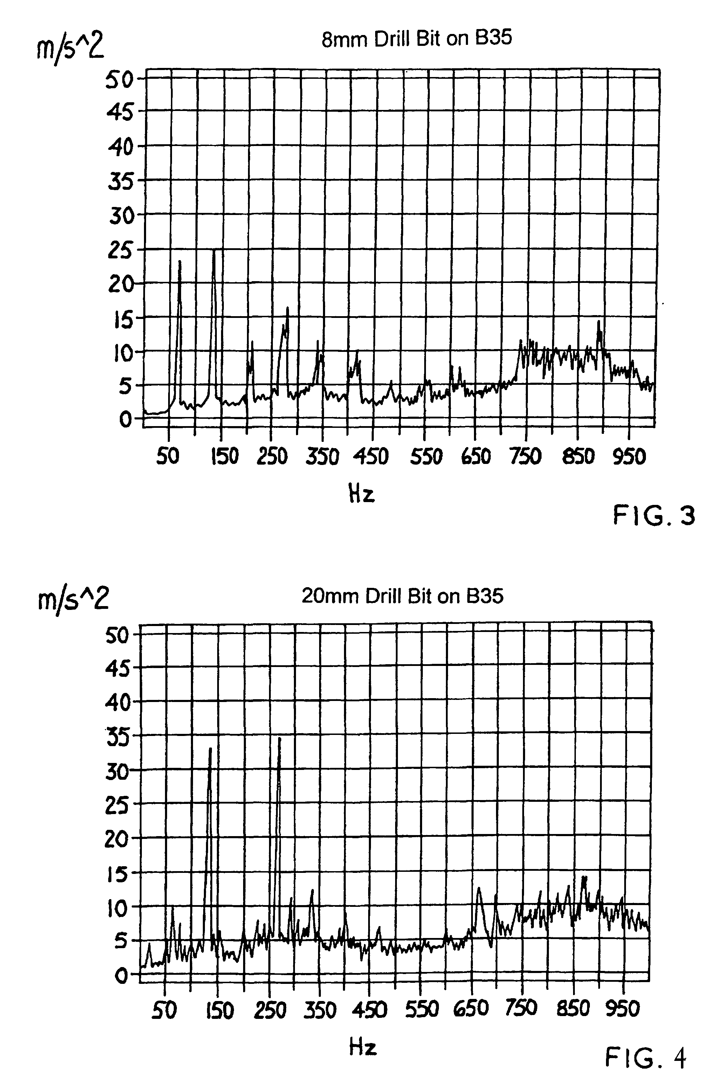

Figures 3 and 4 are typical graphs of vibrational spectra obtained from the accelerometer 26 measuring the vibration in the direction of the axis of the spindle with two different bits, one being an 8mm diameter bit and the other having a 20mm diameter. The vibration spectrum of the hammer using the 8mm diameter bit has a peak 40 at approximately 70 Hz that corresponds to the fundamental vibration, and five further peaks whose intensity generally declines, at 140, 210, 280 340 and 370Hz corresponding to harmonics, above which frequency, no clearly discernible peaks can be seen. In contrast, in the vibrational spectrum of the hammer using a 20 mm bit, the intensity of the fundamental vibration is reduced while the second and fourth harmonics at 140 and 270-280 Hz are particularly pronounced. These vibrational spectra are shown as examples of spectra that can be obtained for a given hammer, but the detail in the spectra will depend on the particular design of hammer. Spectra can be obtained for a range of each of the operating parameters, that is to say for a range of drill bit diameters, concrete hardness, and operator bias, and the microprocessor programmed to recognise the particular spectrum, or to recognise characteristics of any spectrum that indicate which of the operating parameters it is based on. The microprocessor then adjusts the relative speed of motors 6 and 8 in order to achieve the optimum rate of penetration.

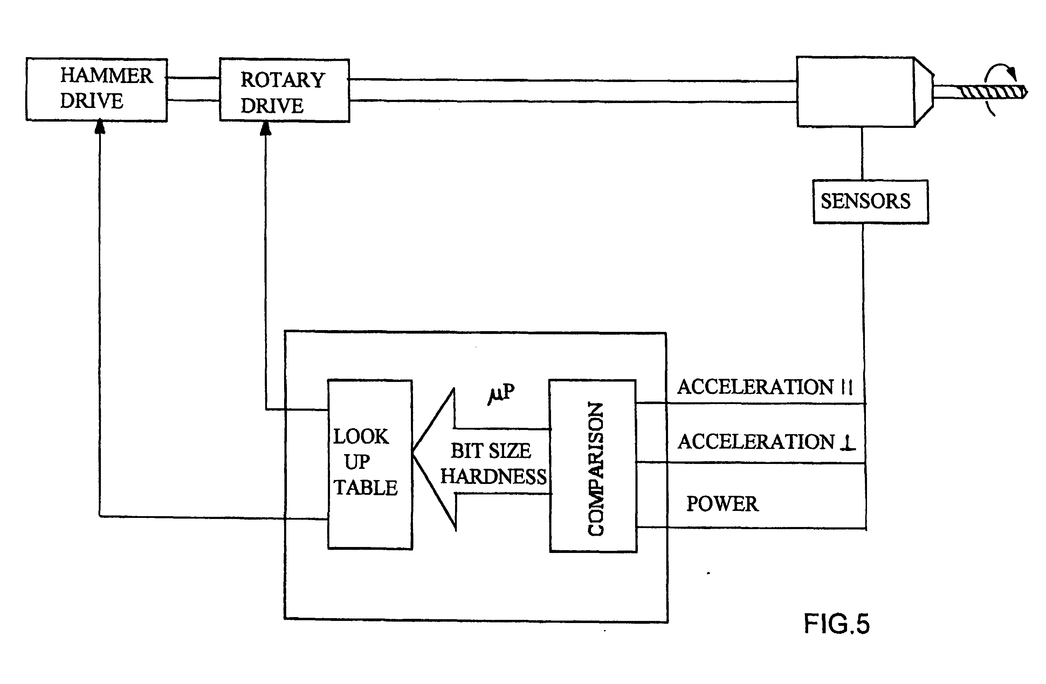

One form of hammer has an operation as shown in figure 5. In this open-loop operation, a number of sensors are provided for measuring, for example, acceleration in directions both parallel and perpendicular to the tool axis, and optionally instantaneous power consumption and/or operator bias. Signals are obtained from the sensors when the hammer is first engaged in the workpiece, and are input to the microprocessor which calculates the operational parameters (bit diameter, concrete hardness and operator bias (if this is not determined by one of the sensors)) therefrom. Having determined the operational parameters, the microprocessor then obtains the desired relative speeds for the two motors from a look-up table using the operational parameters as input variables, in order to ascertain the optimum ratio of hammer motor drive speed to rotary motor drive speed, and sets these speeds for the remainder of the drilling operation.

As an alternative, the microprocessor may repeat the operation every few seconds so that the operational parameters and hence the motor speeds are continually reset during the drilling operation. Such an operation has the advantage that variations in the input parameters such as material hardness and operator bias can be accommodated by the hammer.

## Claims

1. A rotary hammer which comprises a percussion mechanism (18, 22, 24) for impacting a tool bit (4) received by the hammer, and a rotary drive mechanism (10, 12, 16) for rotating the bit, the percussion mechanism and the rotary drive mechanism being variable so that the ratio of rate of impacts on the bit to its rotational speed can be varied, **characterised in that** the hammer includes a sensor (26, 28) for detecting at least one property that is influenced by the operation of the hammer, a processor that determines from the property a number of operational parameters, and determines from the operational parameters the desired ratio of impact rate to rotational speed, and means for setting the impact rate and rotational speed in response to the processor.

2. A hammer as claimed in claim 1, which includes one or more additional sensors.

3. A hammer as claimed in claim 1 or claim 2, which includes a sensor (26) for detecting acceleration in the direction of the axis of rotation of the bit.

4. A hammer as claimed in claim 2, which includes one or more sensors (28) for detecting acceleration in a direction perpendicular to the axis of rotation of the bit, and/or a sensor for detecting the bias of the operator.

5. A hammer as claimed in claim 2, which includes an sensor for measuring the rate of penetration of the hammer into the workpiece.

6. A hammer as claimed in any one of claims 1 to 5, which includes a sensor for detecting instantaneous power consumption of the hammer.

7. A hammer as claimed in any one of claims 1 to 6, wherein the operational parameters determined by the processor include the material hardness of the workpiece, the diameter of the drill bit(4), and/or the bias of the operator.

8. A hammer as claimed in any one of claims 1 to 7, wherein the processor determines the operational parameters by comparing the intensity of the fundamental vibrational peak to the intensity of harmonics in the vibration spectrum.

9. A hammer as claimed in any one of claims 1 to 8, wherein the processor determines the desired ratio of impact rate to rotational speed by means of a look-up table based on experimental data.

10. A hammer as claimed in any one of claims 1 to 9, wherein the processor integrates the signal from the acceleration sensor (in the direction of the axis of rotation of the bit(4)) to determine the rate of penetration of bit into the workpiece.

11. A hammer as claimed in claim 10, wherein the processor integrates the rate of penetration of the bit (4) into the workpiece to determine the depth of penetration of the bit in the workpiece.

12. A hammer as claimed in any one of claims 1 to 10, which includes a feedback loop in which the value of a quantity to be optimised is calculated by the processor from data obtained from the sensor or sensors (26, 28) and used as a set point in the feedback loop, and the actual value of the quantity to be optimised is measured and is subtracted from the set point to obtain an error signal, and the ratio of the impact rate to rotational speed is adjusted by the processor in response to the error signal and data obtained from the sensor or sensors.

## Patentansprüche

1. Bohrhammer mit einem Schlagmechanismus (18, 22, 24) zur Schlagbeaufschlagung eines vom Hammer aufgenommenen Werkzeugelements (4) und mit einem Drehantriebsmechanismus (10, 12, 16) zum Drehen des Elements, wobei der Schlagmechanismus und der Drehantriebsmechanismus veränderbar sind, so dass das Verhältnis von Schlagrate auf das Element zu seiner Drehgeschwindigkeit verändert werden kann, **dadurch gekennzeichnet, dass** der Hammer einen Sensor (26, 28) zur Ermittlung mindestens einer Eigenschaft, die durch den Betrieb des Hammers beeinflusst wird, einen Prozessor, der aus der Eigenschaft eine Anzahl von Betriebsparametern und aus den Betriebsparametern das gewünschte Verhältnis von Schlagrate zu Drehgeschwindigkeit bestimmt, und Mittel zum Einstellen der Schlagrate und der Drehgeschwindigkeit in Abhängigkeit vom Prozessor aufweist.

2. Hammer nach Anspruch 1, der einen oder mehrere zusätzliche Sensoren aufweist.

3. Hammer nach Anspruch 1 oder 2, der einen Sensor (26) zur Ermittlung der Beschleunigung in Richtung der Drehachse des Elements aufweist.

4. Hammer nach Anspruch 2, der einen oder mehrere Sensoren (28) zur Ermittlung der Beschleunigung in Richtung senkrecht zur Drehachse des Elements und/oder einen Sensor zur Ermittlung der Belastung des Benutzers aufweist.

5. Hammer nach Anspruch 2, der einen Sensor zur Messung der Eindringrate des Hammers in das Werkstück aufweist.

6. Hammer nach einem der Ansprüche 1 bis 5, der einen Sensor zur Ermittlung des augenblicklichen Leistungsverbrauchs des Hammers aufweist.

7. Hammer nach einem der Ansprüche 1 bis 6, bei dem die vom Prozessor bestimmten Betriebsparameter die Materialhärte des Werkstücks, den Durchmesser des Bohrers (4) und/oder die Belastung des Benutzers umfassen.

8. Hammer nach einem der Ansprüche 1 bis 7, bei dem der Prozessor die Betriebsparameter durch Vergleich der Intensität von Grundwellenspitzen mit der Intensität von Harmonischen im Schwingungsspektrum ermittelt.

9. Hammer nach einem der Ansprüche 1 bis 8, bei dem der Prozessor das gewünschte Verhältnis von Schlagrate zu Drehgeschwindigkeit mit Hilfe einer auf Versuchsdaten beruhenden Nachschlagetabelle bestimmt.

10. Hammer nach einem der Ansprüche 1 bis 9, bei dem der Prozessor das Signal des Beschleunigungssensors (in Richtung der Drehachse des Elements (4)) integriert, um die Eindringrate des Elements in das Werkstück zu bestimmen.

11. Hammer nach Anspruch 10, bei dem der Prozessor die Eindringrate des Elements (4) in das Werkstück integriert, um die Eindringtiefe des Elements in das Werkstück zu bestimmen.

12. Hammer nach einem der Ansprüche 1 bis 10, der eine Rückkopplungsschleife hat, in der der Wert einer zu optimierenden Größe durch den Prozessor aus vom Sensor oder von den Sensoren (26, 28) erhaltenen Daten errechnet und als Sollwert in der Rückkopplungsschleife benutzt wird und der Istwert der zu optimierenden Größe gemessen und vom Sollwert subtrahiert wird, um ein Fehlersignal zu erhalten, und das Verhältnis von Schlagrate und Drehgeschwindigkeit durch den Prozessor in Abhängigkeit vom Fehlersignal und von vom Sensor oder von den Sensoren erhaltenen Daten eingestellt wird.

## Revendications

1. Marteau rotatif qui comprend un mécanisme de percussion (18, 22, 24) pour frapper un foret (4) reçu par le marteau et un mécanisme d'entraînement en rotation (10, 12, 16) pour faire tourner le foret, le mécanisme de percussion et le mécanisme d'entraînement en rotation étant variables de sorte que le rapport de la fréquence d'impacts sur le foret à sa vitesse de rotation puisse être modifié, **caractérisé en ce que** le marteau comprend un capteur (26, 28) pour détecter au moins une propriété qui est influencée par le fonctionnement du marteau, un processeur qui détermine, à partir de la propriété, un certain nombre de paramètres de fonctionnement et qui détermine, à partir des paramètres de fonctionnement, le rapport souhaité de la fréquence d'impacts à la vitesse de rotation, et des moyens pour régler la fréquence d'impacts et la vitesse de rotation en réponse au processeur.

2. Marteau selon la revendication 1, qui comprend un ou plusieurs capteurs supplémentaires.

3. Marteau selon la revendication 1 ou la revendication 2, qui comprend un capteur (26) pour détecter une accélération dans la direction de l'axe de rotation du foret.

4. Marteau selon la revendication 2, qui comprend un ou plusieurs capteurs (28) pour détecter une accélération dans une direction perpendiculaire à l'axe de rotation du foret et/ou un capteur pour détecter la force appliquée par l'opérateur.

5. Marteau selon la revendication 2, qui comprend un capteur pour mesurer la vitesse de pénétration du foret dans la pièce.

6. Marteau selon l'une quelconque des revendications 1 à 5, qui comprend un capteur pour détecter une consommation d'énergie instantanée du marteau.

7. Marteau selon l'une quelconque des revendications 1 à 6, dans lequel les paramètres de fonctionnement déterminés par le processeur comprennent la dureté du matériau de la pièce, le diamètre du foret (4) et/ou la force appliquée par l'opérateur.

8. Marteau selon l'une quelconque des revendications 1 à 7, dans lequel le processeur détermine les paramètres de fonctionnement en comparant l'intensité de la valeur crête de la fréquence de vibration fondamentale à l'intensité des harmoniques dans le spectre de vibration.

9. Marteau selon l'une quelconque des revendications 1 à 8, dans lequel le processeur détermine le rapport souhaité de la fréquence d'impacts à la vitesse de rotation au moyen d'une table de correspondance basée sur des données expérimentales.

10. Marteau selon l'une quelconque des revendications 1 à 9, dans lequel le processeur intègre le signal provenant du capteur d'accélération (dans la direction de l'axe de rotation du foret (4)) afin de déterminer la vitesse de pénétration du foret dans la pièce.

11. Marteau selon la revendication 10, dans lequel le processeur intègre la vitesse de pénétration du foret (4) dans la pièce afin de déterminer la profondeur de pénétration du foret dans la pièce.

12. Marteau selon l'une quelconque des revendications 1 à 10, qui comprend une boucle de rétroaction dans laquelle la valeur d'une quantité devant être optimisée est calculée par le processeur à partir de données obtenues du capteur ou des capteurs (26, 28) et est utilisée en tant que point de consigne dans la boucle de rétroaction, et la valeur réelle de la quantité devant être optimisée est mesurée et est soustraite du point de consigne afin d'obtenir un signal d'erreur, et le rapport de la fréquence d'impacts à la vitesse de rotation est ajusté par le processeur en réponse au signal d'erreur et aux données obtenues du capteur ou des capteurs.
